# EUROPÄISCHE PATENTANMELDUNG

(11) **EP 4 616 951 A2**
(43) Veröffentlichungstag der Anmeldung: **17.09.2025**
(21) Anmeldenummer: 25186612.5
(22) Anmeldetag: 06.06.2024
(51) Int. Cl.: B02C 25/00

(54) **BRECHER FÜR MINERALISCHE WERKSTOFFE ODER RECYCLINGWERKSTOFFE**

(30) Priorität: 28.06.2023 DE 102023116990
(62) Teilanmeldung aus: 24180367.5
(71) Anmelder: KLEEMANN GMBH, 73037 Göppingen (DE)
(72) Erfinder: KRAUSS, Till, 73098 Rechberghausen (DE); MEYER, Gerd, 73340 Amstetten (DE); MEIER, Jochen, 72584 Hülben (DE); HÄBERLE, Steffen, 89542 Herbrechtingen (DE); TEICHERT, Rainer, 42781 Haan (DE)
(74) Vertreter: Herrmann, Jochen

(57) **Zusammenfassung**

Die Erfindung betrifft einen Brecher für mineralische Werkstoffe oder Recyclingwerkstoffe, insbesondere Rotationsprallbrecher, Backenbrecher, Kegelbrecher oder Walzenbrecher, mit einem Brechaggregat (10), das einen ersten Brechkörper (11), insbesondere einen Rotor oder eine Brechbacke aufweist, wobei dem ersten Brechkörper (11) ein zweiter bewegbarer Brechkörper (14), insbesondere eine Prallschwinge oder eine Brechbacke, zugeordnet ist, wobei zwischen den Brechkörpern (11, 14) ein Brechspalt (15) gebildet ist, wobei mit einem der Brechkörper (11, 14) ein Hydraulikzylinder (20) gekoppelt ist, der angeordnet und ausgebildet ist, um in einer Ausweichbewegung eine, die Breite des Brechspalts (15) vergrößernde Bewegung des angekoppelten Brechkörpers (11, 14) zuzulassen, wobei ein Druckraum (24) des Hydraulikzylinders (20) an eine Druckkammer (41.6) eines Druck-Entlastungsventils (40) einer Überlast-Auslöseeinrichtung (30) angeschlossen ist, wobei ein Kolben (50) des Druck-Entlastungsventils (40) zwischen einer Schließstellung und einer Öffnungsstellung verstellbar ist, wobei in der Schließstellung eine fluidleitende Verbindung zwischen der Druckkammer (41.6) und einem Druck-Ausgleichsbereich (B) gesperrt und in der Öffnungsstellung die fluidleitende Verbindung zumindest bereichsweise freigegeben ist, und wobei der Kolben (50) wenigstens eine Kolben-Druckflächen (56) aufweist, mittels der der Kolben (50) die Druckkammer (41.6) in der Schließstellung quer zur Stellrichtung des Kolbens (50) begrenzt. Um bei einem solchen Druck-Entlastungsventil (40) ein schnelles Ansprechverhalten zu verwirklichen, ist es gemäß der Erfindung vorgesehen, dass der Kolben (50) auf seiner der Druckkammer (41.6) abgewandten Seite einen Flächenbereich (58) aufweist, der in der Schließstellung des Kolbens (50) einen Kammerbereich (41.11) quer zur Stellrichtung des Kolbens (50) begrenzt, um unter Einwirkung des Drucks im Kammerbereich (41.11) eine Schließkraft in Richtung der Schließstellung in den Kolben (50) einzubringen.

## Beschreibung

Die Erfindung betrifft einen Brecher für mineralische Werkstoffe oder Recyclingwerkstoffe, insbesondere Rotationsprallbrecher, Backenbrecher, Kegelbrecher oder Walzenbrecher, mit einem Brechaggregat, das einen ersten Brechkörper, insbesondere einen Rotor oder eine Brechbacke aufweist, wobei dem ersten Brechkörper ein zweiter bewegbarer Brechkörper, insbesondere eine Prallschwinge oder eine Brechbacke, zugeordnet ist, wobei zwischen den Brechkörpern ein Brechspalt gebildet ist, wobei mit einem der Brechkörper ein Hydraulikzylinder gekoppelt ist, der angeordnet und ausgebildet ist, um in einer Ausweichbewegung eine die Breite des Brechspalts vergrößernde Bewegung des angekoppelten Brechkörpers zuzulassen, wobei ein Druckraum des Hydraulikzylinders an eine Druckkammer eines Druck-Entlastungsventils einer Überlast-Auslöseeinrichtung angeschlossen ist, wobei ein Kolben des Druck-Entlastungsventils zwischen einer Schließstellung und einer Öffnungsstellung verstellbar ist, wobei in der Schließstellung eine fluidleitende Verbindung zwischen der Druckkammer und einem Druck-Ausgleichsbereich gesperrt und in der Öffnungsstellung die fluidleitende Verbindung zumindest bereichsweise freigegeben ist, und wobei der Kolben wenigstens eine Kolben-Druckflächen aufweist, mittels der der Kolben die Druckkammer in der Schließstellung quer zur Stellrichtung des Kolbens begrenzt.

Aus DE 10 2017 002 079 B4 ist eine Prallbrechanlage bekannt, bei der zwischen einem drehbaren Rotor und einer Prallschwinge ein veränderbarer Brechspalt eingestellt ist. Im normalen Brechbetrieb wird das zu brechende Material dem Rotor über eine Materialzuführung zugeleitet. Der Rotor schleudert dieses gegen die Prallschwinge. Die dabei auftretenden Kräfte führen zum Brechen des Gesteinsmaterials. Das Gesteinsmaterial wird somit auf die gewünschte Korngröße zerkleinert und kann über den Brechspalt aus dem Brechergehäuse herausfallen. Nun kann es vorkommen, dass nicht brechbare Körper dem Rotor zugeführt werden. Beispielsweise kann es sich hierbei um Eisenteile handeln. Dies stellt eine kritische Überlastsituation für den Prallbrecher dar. Insbesondere besteht die Gefahr, dass es hierbei zu Schäden an dem Brecher kommt. Damit eine derartige Überlastsituation beherrschbar ist, ist an die Prallschwinge eine Kolben-Zylindereinheit angekoppelt. Mittels dieser kann die Stellung der Prallschwinge und damit die Breite des Brechspalts verändert werden. Die Kolben-Zylindereinheit umfasst eine Gasfeder, gegen die die Prallschwinge abgestützt ist.

Im normalen Brechbetrieb wird die Breite des Brechspalts auf das gewünschte Maß eingestellt. Im kritischen Überlastfall kann die Gasfeder komprimiert werden und damit die Prallschwinge ausweichen. Auf diese Weise lässt sich impulsartig der Brechspalt vergrößern. Der nicht brechbare Körper kann dann aus dem Brechspalt herausfallen. Anschließend wird die Breite des Brechspalts wieder auf das gewünschte Maß eingestellt.

Mit der in der DE 10 2017 002 079 B4 vorgeschlagenen Gasfeder wird eine Elastizität in die Abstützung der Prallschwinge eingebracht. Während des Brechbetriebs werden die Kräfte, aufgrund unterschiedlich harter und unterschiedlich großer Gesteinsbrocken in einem gewissen zulässigen Maß variieren. Die elastische Gasfeder bewirkt, in Reaktion auf diese wechselnden Kräfte, eine ständige Variation des Brechspalts und damit der Korngröße des gebrochenen Materials, was unerwünscht ist.

Aus EP 0 019 541 B1 ist eine Prallmühle bekannt, bei der der Brechspalt über einen Hydraulikzylinder eingestellt werden kann. Der Hydraulikzylinder weist einen Kolben auf, an den eine Kolbenstange angekoppelt ist. Der Kolben ist in einem Zylinderraum verstellbar. Die Kolbenstange ist mit der Prallschwinge verbunden. Für den Fall einer Überlast-Situation ist ein Überlastventil vorgesehen. Falls ein nicht brechbarer Körper in den Brechraum gelangt, wird das Überlastventil ausgelöst. Hierdurch vergrößert sich der Brechspalt und der nicht brechbare Körper kann wieder aus dem Brechraum fallen.

Bei Brechern, insbesondere bei Rotationsprallbrechern ist es nun häufig so, wie dies bereits vorstehend angedeutet wurde, dass im normalen Brechbetrieb Gesteinsmaterial mit unterschiedlicher Größe und unterschiedlicher Härte dem Brechaggregat zugeführt werden. Diese Gesteinsmaterialien sind für den Rotationsprallbrecher beherrschbar und können gebrochen werden. Insofern muss ein derartiger unkritischer Fall unterschieden werden, von einer kritischen Überlast-Situation, in der ein nicht brechbarer Körper in den Bereich des Brechaggregats gelangt. Das aus der EP 0 019 541 B1 bekannte Verfahren eignet sich für langsam laufende Brechervarianten. Hierbei müssen die Maschinenkomponenten zur Einstellung des Brechspalts, sowie die Kolbenstange des Hydraulikzylinders so weit bewegt werden, dass sich durch die Fluidkompression ein Kammerdruck einstellt, der zum Auslösen des Druck-Entlastungsventils führt. Es ist naheliegend, dass der Einstelldruck des Druck-Entlastungsventils nicht zu niedrig sein darf, da andernfalls durch normale Brecherlasten eine Verstellung des Brechspalts stattfinden würde, was maßgebliche Qualitätseinbußen des Endmaterials mit sich bringen würde. Bei schnelllaufenden Brechervarianten ist eine schnelle Öffnung des Brechspalts gefordert. Entsprechend muss das Druck-Entlastungsventils schnell reagieren können und gleichzeitig ausreichend dimensioniert sein, um den Druckanstieg durch die sich sehr schnell beschleunigenden Maschinenkomponenten zur Einstellung des Brechspalts begrenzen zu können.

Weitere Brecher mit Überlast-Auslöseeinrichtungen sind aus EP 3 919 177 B1 und EP 2 774 681 B1 bekannt.

Aufgabe der Erfindung ist es einen Brecher der eingangs erwähnten Art bereitzustellen, bei dem die Überlast-Auslöseeinrichtung im Überlastfall schnell anspricht und wobei gleichzeitig im Normalbetrieb der Brechspalt im Brechbetrieb möglichst konstant gehalten wird.

Diese Aufgabe wird dadurch gelöst, dass der Kolben auf seiner der Druckkammer abgewandten Seite einen Flächenbereich aufweist, der in der Schließstellung des Kolbens einen Kammerbereich quer zur Stellrichtung des Kolbens begrenzt, um unter Einwirkung des Drucks im Kammerbereich eine Schließkraft in Richtung der Schließstellung in den Kolben einzubringen.

In der Schließstellung des Kolbens wirkt in Öffnungsrichtung des Kolbens eine Öffnungskraft. Diese errechnet sich aus dem Druck in der Druckkammer und der die Druckkammer begrenzenden wirksamen Kolben-Druckfläche, auf der dieser Druck auflastet. In Schließrichtung des Kolbens wirkt eine Schließkraft. Diese errechnet sich aus dem Druck in dem Kammerbereich und dem Flächeninhalt des den Kammerbereich begrenzenden Flächenbereichs, auf dem der Druck im Kammerbereich auflastet. Mit anderen Worten kann mit der Schließkraft zumindest ein Teil der Öffnungskraft kompensiert werden. Hierdurch kann der Kolben besonders leicht ausgestaltet werden, wodurch sich eine geringe zu bewegende Masse ergibt. Hierdurch wird ein Druck-Entlastungsventil geschaffen, welches im Überlastfall schnell öffnen kann. Dies ermöglicht ein kurzes Ansprechverhalten des Druck-Entlastungsventils im Überlastfall. Vorteilhafterweise kann es vorgesehen sein, dass das Verhältnis der Masse (in Gramm) des Kolbens zu der Nennöffnungsfläche (in mm²) im Bereich zwischen 0,03 und 0,15 gewählt ist. Die Nennöffnungsfläche ist die Fläche, die die umlaufende Fläche des Ventilsitzes einschließt, an der der Kolben in der Schließstellung anliegt.

Vorzugsweise ist es vorgesehen, dass in der Schließstellung der Druck im Kammerbereich niedriger ist, als in der Druckkammer.

Weiter bevorzugt ist es so, dass sowohl in der Druckkammer, als auch im Kammerbereich der Druck eines Hydraulikfluids auflastet, also ein Hydraulikfluid in die Druckkammer und den Kammerbereich eingefüllt ist.

Besonders bevorzugt ist der Kammerbereich an eine Kammer des Hydraulikzylinders angeschlossen, welche die Kolbenstange des Hydraulikzylinders aufnimmt (Stangenseite des Hydraulikzylinders). Hierbei kann es insbesondere vorgesehen sein, dass der Stangenseite des Hydraulikzylinders eine Druckregelung zugeordnet ist, die dazu vorgesehen und ausgebildet ist, um den Druck auf der Stangenseite des Hydraulikzylinders nachzuregeln, wenn der Hydraulikzylinder-Kolben des Hydraulikzylinders verstellt wird.

Eine bevorzugte Erfindungsvariante ist dergestalt, dass an den Kolben des Druck-Entlastungsventils eine Ausgleichs-Druckfläche mittelbar oder unmittelbar angeschlossen ist, die außerhalb der Druckkammer in einem Außen-Druckbereich gehalten ist, und dass die Ausgleichs-Druckfläche ausgebildet und angeordnet ist, um unter Einwirkung des Drucks im Außen-Druckbereich eine Schließkraft in Richtung der Schließstellung in den Kolben einzubringen. Durch diese Maßnahme wird die Schließkraft zusätzlich unterstützt. Aus dem an der Ausgleichs-Druckfläche anstehendem Druck und der Größe der Ausgleichs-Druckfläche rechnet sich eine Zusatz-Schließkraft, die in Schließrichtung wirkt.

Beispielsweise kann es vorgesehen sein, dass in der Schließstellung des Kolbens der Druck im Außen-Druckbereich kleiner ist als in der Druckkammer, und dass der Außen-Druckbereich in luftleitender Verbindung mit der Umgebung steht, mithin also hier Atmosphärendruck anliegt. Hierdurch ergibt sich eine einfache Bauweise mit geringem Teile- und Montageaufwand. Alternativ kann es so sein, dass in der Schließstellung des Kolbens der Druck eines Hydraulikfluids auf die Ausgleichs-Druckfläche wirkt. Dabei kann es vorgesehen sein, dass der Druck im Außen-Druckbereich kleiner ist als in der Druckkammer. Der Druck in der Druckkammer kann allerdings auch größer oder gleich dem Druck im Außen-Druckbereich sein.

Vorzugsweise ist es vorgesehen, dass der Kammerbereich räumlich von dem Außendruckbereich getrennt ist.

Durch eine geeignete Wahl der Größe der Kolben-Druckfläche, die die Druckkammer begrenzt, der Größe des Flächenbereichs, die den Kammerbereich begrenzt, und der Größe der Ausgleichs-Druckfläche, auf der der Druck im Außen-Druckbereich auflastet kann, die Schließkraft gezielt beeinflusst werden, wobei sich gleichzeitig eine leichte Bauweise für den Kolben ergibt.

Mit dieser Lösung werden die Kolben-Druckfläche-/n und damit die Wirkfläche-/n, über die eine Kraft zur Verstellung des Kolbens und damit zur Auslösung des Druck-Entlastungsventils eingebracht wird/werden, gegenüber den aus dem Stand der Technik bekannten Lösungen verkleinert. Entsprechend sind niedrigere Kräfte erforderlich, um den Kolben im Überlastfall zu verstellen. Damit entstehen am Kolben beherrschbar Kräfte, die außerhalb der Druckkammer des Druck-Entlastungsventils einfach abgefangen werden können, um das Druck-Entlastungsventil im normalen Brecher-Betrieb im Schließzustand zu halten. Zusätzlich wird durch diese Bauweise eine Massenreduktion des Kolbens und damit der beschleunigten Bauteile des Druck-Entlastungsventils erreicht. Hierdurch wird das Ansprechverhalten im Überlastfall weiter verbessert.

Eine baulich einfache Konstruktion ergibt sich dann, wenn vorgesehen ist, dass an den Kolben ein Stellglied, insbesondere eine Kolbenstange, angeschlossen ist, die außerhalb der Druckkammer die Ausgleichs-Druckfläche bildet. Ist die Kolbenstange durch den Kammerbereich geführt und an den Kolben angeschlossen, so reduziert der Querschnitt der Kolbenstange gleichzeitig auch den wirksamen Flächenbereich in dem Kammerbereich, sodass über den Querschnitt der Kolbenstange gezielt dieser Flächenbereich beeinflusst werden kann.

Wenn vorgesehen ist, dass auf den Kolben mittelbar oder unmittelbar eine Feder, insbesondere eine mechanische Feder, einwirkt, die in der Schließstellung des Kolbens eine Schließkraft in Schließrichtung auf den Kolben aufbringt, dann wird erreicht, dass im Normalbetrieb (also dann, wenn kein Überlastfall ansteht) des Brechers der Brechspalt möglichst konstant gehalten wird. Durch geeignete Dimensionierung der Feder kann die Schließkraft so beeinflusst werden, dass unbeabsichtigt ein Überlastfall ausgelöst wird, wenn hartes Gesteinsmaterial im Brechraum zerkleinert werden muss.

Eine kompakte Bauweise kann für das Druck-Entlastungsventil dann realisiert werden, wenn vorgesehen ist, dass die Feder im Außen-Druckbereich, insbesondere innerhalb des Zylinders des Druck-Entlastungsventils, angeordnet ist.

Wenn vorgesehen ist, dass die Druck-Ausgleichsfläche von einem Druckstück des Kolbens gebildet wird, und dass die Feder an dem Druckstück abgestützt ist, dann kann die Federkraft über den Kolben unmittelbar übertragen werden, was die Funktionssicherheit erhöht. Bevorzugt kann es dabei vorgesehen sein, dass das Druckstück einen radial außen über die Druck-Ausgleichsfläche vorstehenden Bereich aufweist, an dem die Feder abgestützt ist. so dass sich eine gute Abstützung und Krafteinleitung für die Feder ergibt.

Eine besonders bevorzugte Ausgestaltungsvariante der Erfindung sieht vor, dass in der Schließstellung des Kolbens des Druck-Entlastungsventils der Druck eines Hydraulikfluids auf den Flächenbereich wirkt, wobei vorzugsweise vorgesehen ist, dass der Druck im Kammerbereich kleiner ist als in der Druckkammer.

Zusätzlich kann vorgesehen sein, dass der Kammerbereich des Druck-Entlastungsventils in hydraulisch leitender Verbindung an eine Kammer des Hydraulikzylinders angeschlossen ist, die eine Kolbenstange des Hydraulikzylinders aufnimmt und in der ein Hydraulikfluid gehalten ist. Die Kammer kann auch als die Stangenseite des Hydraulikzylinders bezeichnet werden. Durch die Einbeziehung der Stangenseite in die Überlast-Auslöseeinrichtung verringert sich zunächst der konstruktive Aufwand, da kein Öl separat nachgeführt werden muss. Wenn der Stangenseite eine Druckregeleinrichtung zugeordnet ist, die den Druck in der Kammer nachregelt, wird ein adaptiv wirkendes Druck-Entlastungsventil geschaffen. Im Normalbetrieb des Brechers, also dann, wenn keine Überlastsituation ansteht, ist das Druck-Entlastungsventils in der Lage Schwankungen der Brechkraft, welche im Brechspalt entsteht, auszugleichen. Gelangt härteres Gesteinsmaterial in den Brechspalt, so wird der Hydraulikzylinder-Kolben des Hydraulikzylinders und mit ihm die Kolbenstange verstellt. Da die Druckregelung den Druck auf der Stangenseite nachregelt, bleibt der Kolben des Druck-Entlastungsventils in der Schließstellung. Hierdurch wird eine unbeabsichtigte Auslösung des Druck-Entlastungsventils verhindert. Das Druck-Entlastungsventil kann sich mithin auf unterschiedliche Lastsituationen anpassen. Erfolgt hingegen im Überlastfall eine schnelle Verstellung des Hydraulikzylinder-Kolbens, so führt die Druckregeleinrichtung den Druck nicht mehr auf der Stangenseite nach. Es entsteht dann ein Druckgefälle, so dass das Druck-Entlastungsventil auslöst.

Um ein Verkanten des Kolbens des Druck-Entlastungsventils in seinem Zylinder zu verhindern, kann es vorgesehen sein, dass der Flächenbereich des Druck-Entlastungsventils eine Ringfläche bildet, die sich vorzugsweise konzentrisch um das Stellglied, insbesondere die Kolbenstange, herum erstreckt.

Eine stabile Führung des Stellglieds, insbesondere der Kolbenstange, im Zylinder des Druck-Entlastungsventils kann auf einfache Weise dadurch erreicht werden, dass sich das Stellglied, insbesondere die Kolbenstange, in der Schließstellung des Kolbens durch den Kammerbereich hindurch erstreckt, wobei vorzugsweise vorgesehen ist, dass der Kammerbereich beabstandet zum Kolben von einer Kolbenführung begrenzt ist, wobei die Kolbenführung einen Durchbruch aufweist, durch den hindurch das Stellglied, insbesondere die Kolbenstange, mittels einer Führungsfläche abgedichtet hindurch geführt ist.

Um im Überlastfall schnell und effektiv den Druck in der Druckkammer des Druck-Entlastungsventils abbauen zu können, kann es vorgesehen sein, dass der Kolben des Druck-Entlastungsventils einen Kolbenkopf aufweist, an den das Stellglied, insbesondere die Kolbenstange, angekoppelt, vorzugsweise einteilig angeschlossen, ist. und wobei der Kolbenkopf aus seiner Schließstellung heraus in den Kammerbereich hinein verstellbar ist, und wobei vorzugsweise vorgesehen ist, dass der Kolbenkopf bei seiner Bewegung aus der Schließstellung in die Öffnungsstellung oder eine Teil-Öffnungsstellung an wenigstens einer Ausströmöffnung zumindest teilweise vorbeigeführt wird, um eine hydraulisch leitende Verbindung zwischen der Druckkammer und dem Druck-Ausgleichsbereich herzustellen.

In Weiterbildung der Erfindung kann es vorgesehen sein, dass innerhalb des Kammerbereichs des Druck-Entlastungsventils ein Entlastungs-Kolben verstellbar geführt ist, wobei der Entlastungs-Kolben zwischen einer Schließstellung und einer Öffnungsstellung verstellbar ist, wobei in der Schließstellung eine fluidleitende Verbindung zwischen der Druckkammer und einem Entlastungs-Ausgleichsbereich gesperrt und in der Öffnungsstellung die fluidleitende Verbindung zumindest bereichsweise freigegeben ist, dass der Entlastungs-Kolben wenigstens eine Kolben-Druckflächen aufweist, mittels der der Entlastungs-Kolben den Kammerbereich in der Schließstellung quer zur Stellrichtung des Entlastungs-Kolben begrenzt, und dass infolge einer Druckerhöhung des Drucks in dem Hydraulikzylinder der Kolben und der Entlastungs-Kolben nacheinander öffnen. Wenn im Überlastfall der Kolben des Druck-Entlastungsventils zum Druckabbau öffnet, so ist es mit dieser Lösung möglich, einen zusätzlichen Druckabbau über den Entlastungs-Kolben zu bewerkstelligen. Dies ist insbesondere dann vorteilhaft, wenn nach Öffnen des Kolbens im Druck Ausgleichsbereich ein noch relativ hoher Druck ansteht, der dann durch Öffnung des Entlastungs-Kolbens in den Entlastungs-Druckbereich abgebaut werden kann. Beispielsweise kann der Entlastungs-Druckbereich an einen Tank angeschlossen werden, in den überschüssiges Hydrauliköl abgeleitet wird.

Denkbar ist es, dass hierbei der Druck-Ausgleichsbereich an die Stangenseite des Hydraulikzylinders angeschlossen ist. Überschüssiges Öl, welches aufgrund des durch die Kolbenstange des Hydraulikzylinders auf der Stangenseite bedingten geringeren Volumens nicht im Überlastfall aufgenommen werden kann, kann dann über den Entlastungs-Druckbereich in den Tank abgegeben werden.

Das Ansprechverhalten eines solchen Druck-Entlastungsventils kann dadurch verbessert werden, dass im Schließzustand des Entlastungs-Kolbens die Projektion der Kolben-Druckfläche oder der Kolben-Druckflächen des Entlastungs-Kolbens in eine Projektionsebene quer zur Stellrichtung des Entlastungs-Kolbens nur einen Teil des Kammerbereichs quer zur Stellrichtung des Entlastungs-Kolbens begrenzt.

Die Erfindung wird im Folgenden anhand von in den Zeichnungen dargestellten Ausführungsbeispielen näher erläutert. Es zeigen:
- Figur 1:: in perspektivischer Prinzipdarstellung ein Brechaggregat eines Rotationsprallbrechers mit angeschlossenen Maschinenkomponenten des Brechers,
- Figuren 2 und 3:: in schematischer Darstellung das Brechaggregat gemäß Figur 1 mit einer Überlast-Auslöseeinrichtung,
- Figur 4:: in schematischer Darstellung die Überlast-Auslöseeinrichtung,
- Figur 5:: in schematischer Darstellung ein Druck-Entlastungsventil der Überlast-Auslöseeinrichtung,
- Figur 6:: in schematischer Darstellung ein weiteres Ausführungsbeispiel eines Druck-Entlastungsventil der Überlast-Auslöseeinrichtung und
- Figur 7: eine weitere Ausgestaltungsvariante der Erfindung in schematischer Darstellung.

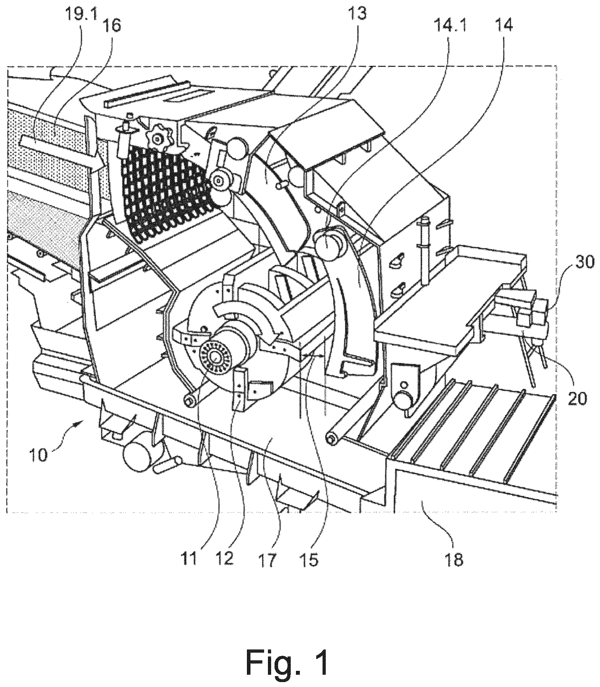

In Figur 1 ist ein Brechaggregat 10 eines Rotationsprallbrechers dargestellt. Das Brechaggregat 10 umfasst ein Brechergehäuse, in dem ein beweglicher Brechkörper 11 drehbar gelagert ist. Entsprechend ist der bewegliche Brechkörper 11 vorliegend als Rotor ausgebildet. Der Rotor trägt im Bereich seines Außenumfangs Schlagleisten 12.

Innerhalb des Brechergehäuses ist eine obere Prallschwinge 13 angeordnet. Weiterhin ist im Brechergehäuse auch ein weiterer Brechkörper 14 angeordnet, der vorliegend eine untere Prallschwinge bildet.

Zwischen dem Rotor (Brechkörper 11) und der unteren Prallschwinge (Brechkörper 14) wird ein Brechspalt 15 gebildet. Bei drehendem Rotor bilden die radial äußeren Enden der Schlagleisten 12 einen äußeren Brechkreis. Dieser Brechkreis bildet zusammen mit einer zugewandten Fläche der unteren Prallschwinge den Brechspalt 15. Die untere Prallschwinge 14 ist mittels eines Schwenklagers 14.1 schwenkbar gelagert. Über die gewählte Schwenkstellung der unteren Prallschwinge kann die Breite des Brechspalts 15 eingestellt werden.

Wie Figur 1 weiter erkennen lässt, ist dem Brechaggregat 10 eine Materialzuführung 16 zugeordnet. Über diese Materialzuführung 16 kann zu brechendes Material 19.1 in den Brechraum gefördert werden. Die Förderrichtung ist in Figur 1 mit einem Pfeil symbolisiert. Wenn das zu brechende Material 19.1 in den Bereich des Brechkörpers 11 gelangt, wird es mittels der Schlagleisten 12 nach außen geschleudert. Dabei trifft dieses Material auf die obere Prallschwinge 13 und auf die untere Prallschwinge 14. Beim Aufprall auf eine Schlagleiste 12 auf im Brechraum befindliches zu brechendes Material oder auf die beiden Prallschwingen 13, 14 wird das zu zerkleinernde Material 19.1 gebrochen.

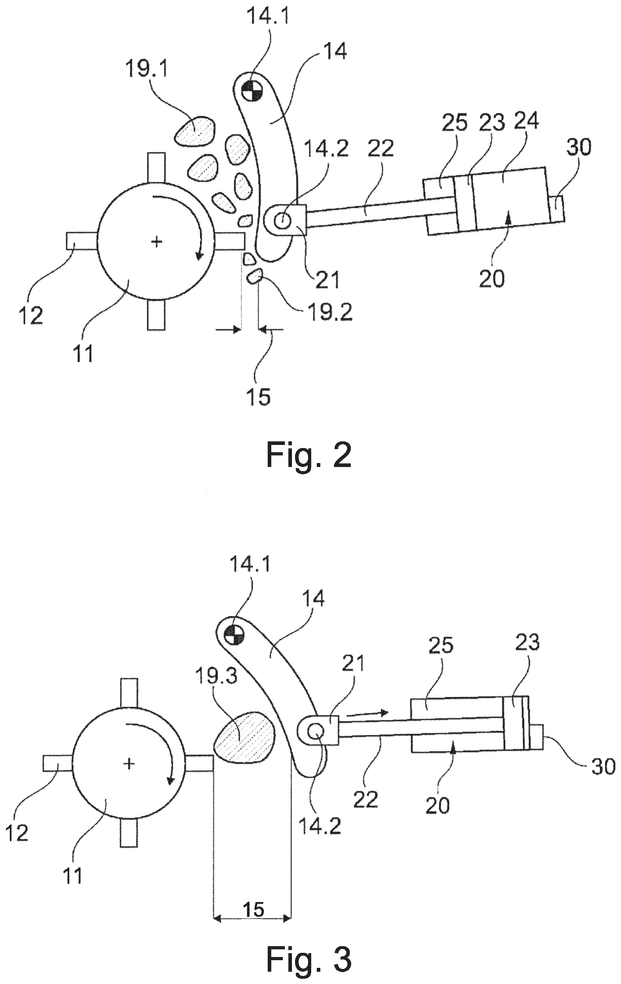

Für die untere Prallschwinge 14 ist dies beispielhaft in den Figuren 2 und 3 näher dargestellt. Beim Auftreffen des zu brechenden Materials 19.1 auf den Brechkörper 14 entsteht gebrochenes Material 19.2, wie dies Figur 2 zeigt. Sobald dieses gebrochene Material 19.2 eine Korngröße aufweist, die kleiner ist als der Brechspalt 15, fällt dieses gebrochene Material 19.2 durch den Brechspalt 15 hindurch. Es gelangt dann in einen Sammelbereich 17 unterhalb des beweglichen Brechkörpers 11 (Rotor). Wie Figur 1 zeigt, ist an den Sammelbereich 17 eine Fördereinrichtung 18 angeschlossen. Über diese Fördereinrichtung 18 kann das gebrochene Material 19.2 abtransportiert werden.

Wie Figur 2 weiter zeigt, ist der Brechkörper 14 mittels eines Aktuators in Form eines Hydraulikzylinders 20 gegenüber der Maschinenkonstruktion des Brechers abgestützt. Die Abstützung an der Maschinenkonstruktion, beispielsweise an dem Maschinengestell des Brechers, ist in den Zeichnungen nicht näher detailliert. Allerdings ist in Figur 1 erkennbar, dass der Hydraulikzylinder 20 geschützt im Wesentlichen außerhalb des Brechergehäuses montiert ist, in dem der Rotor aufgenommen ist.

Wie die Figuren 2 und 3 zeigen, weist der Hydraulikzylinder 20 einen Zylinder 25 auf, in dem ein Hydraulikzylinder-Kolben 23 verstellbar geführt ist. Der Hydraulikzylinder-Kolben 23 trägt eine Kolbenstange 22. Die Kolbenstange 22 ist an ihrem dem Hydraulikzylinder-Kolben 23 abgewandten Ende mit einem Koppelstück 21 ausgestattet, welches ein Lagerteil aufweist. Mittels dieses Lagerteils ist das Koppelstück 21 an ein Lager 14.2 des Brechkörpers 14 angeschlossen. Damit ist der Hydraulikzylinder 20 schwenkbar an dem Brechkörper 14 angekoppelt. Die Koppelstelle steht im Abstand zu dem Schwenklager 14.1.

Wie Figur 2 erkennen lässt, begrenzt der Hydraulikzylinder-Kolben 23 einen Druckraum 24 im Zylinder 25. In dem Druckraum 24 ist Hydraulikflüssigkeit, insbesondere Hydrauliköl, eingefüllt. Der Hydraulikzylinder-Kolben 23 wird gegenüber diesem Medium abgestützt. Damit werden die Kolbenstange 22 und der Brechkörper 14 in der in Figur 2 gezeigten vorgegebenen Brechstellung gehalten.

Abhängig von der anstehenden Brechaufgabe ist es erforderlich, die Betriebsposition des Brechspalts 15 geeignet einzustellen. Hierzu weist der Brecher eine Steuerungseinrichtung auf. Wenn ausgehend von der in Figur 2 gezeigten Position der Brechspalt 15 breiter eingestellt werden soll, so wird Hydraulikflüssigkeit aus dem Druckraum 24 abgelassen. Hierdurch fährt der Hydraulikzylinder-Kolben 23 weiter in den Zylinder 25 ein, bis der gewünschte Brechspalt 15 eingestellt ist. Wird hingegen ein engerer Brechspalt 15 gewünscht, so wird zusätzliche Hydraulikflüssigkeit in den Druckraum 24 eingefüllt. Hierdurch wird der Hydraulikzylinder-Kolben 23 unter Vergrößerung des Druckraums 24 verstellt. Die Kolbenstange 22 fährt weiter aus dem Zylinder 25 aus. Hierdurch wird der Brechkörper 14 im Uhrzeigersinn verschwenkt, sodass sich eine Verjüngung des Brechspalts 15 ergibt.

Wie die Figuren 2 und 3 zeigen, ist eine Überlast-Auslöseeinrichtung 30 verwendet. Diese kann entweder direkt mit dem Hydraulikzylinder 20 verbunden oder getrennt von diesem maschinenseitig verbaut sein.

Die Erfindung kann auch an einem anderen Gesteinsbrecher verwirklicht werden, beispielsweise an einem Backenbrecher, einem Kegelbrecher oder einem Walzenbrecher.

Bei einem Backenbrecher weist das Brechaggregat als ersten Brechkörper 11 eine feste Brechbacke und dieser gegenüberstehend einen Brechkörper 14 in Form einer bewegbaren Brechbacke auf. Die feste und die bewegbare Brechbacke sind schräg verlaufend zueinander ausgerichtet, sodass zwischen ihnen ein sich zu einem Brechspalt 15 hin konisch verjüngender Schacht ausgebildet ist. Die bewegbare Brechbacke wird, beispielsweise von einem Exzenter, angetrieben.

Mittels des Exzenters wird die bewegbare Brechbacke in einer elliptischen Bewegung auf die feste Brechbacke zu- und von dieser wegbewegt. Während eines solchen Hubes ändert sich auch der Abstand zwischen den Brechbacken. Durch die Bewegung der bewegbaren Brechbacke wird das zu brechenden Material 19.1 entlang des konischen Schachtes immer weiter zerkleinert, bis es eine Korngröße erreicht hat, die es ihm ermöglicht, den Schacht durch den Brechspalt 15 zu verlassen. Das zerkleinerte Material 19.2 fällt auf ein Brecherabzugsband und wird über dieses weiter gefördert. Die bewegbare Brechbacke kann mittels eines Aktuators 20, der beispielsweise in Form eines Hydraulikzylinders 20 ausgebildet sein kann, gegenüber dem Maschinengestell abgestützt sein. Der Hydraulikzylinder 20 kann beispielsweise in einer Weise ausgebildet sein, wie dies vorstehend beschrieben wurde. An den Hydraulikzylinder 20 kann dann eine Überlast-Auslöseeinrichtung 30 angekoppelt sein.

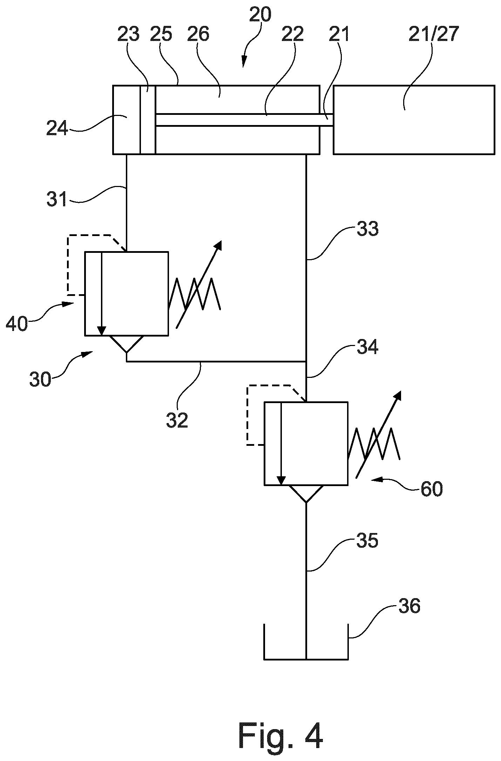

Figur 4 veranschaulicht eine Ausgestaltungsvariante einer Überlast-Auslöseeinrichtung 30. Die Darstellung zeigt wieder den Hydraulikzylinder 20 mit dem im Zylinder 25 geführten Hydraulikzylinder-Kolben 23, der an die Kolbenstange 22 angekoppelt ist. Die Kolbenstange 22 ist aus dem Zylinder 25 herausgeführt. Die Kolbenstange 22 ist in einer Kammer 26 des Zylinders angeordnet, die die Stangenseite des Hydraulikzylinders 20 bildet. Außerhalb des Zylinders 25 ist die Kolbenstange 22 mittels einer Übertragungsvorrichtung 27 an den Brechkörper 14 angekoppelt. Im einfachsten Fall kann die Übertragungsvorrichtung 27 von dem Koppelstück 21 gebildet sein.

Der Druckraum 24 des Hydraulikzylinders 20 ist über eine Druckleitung 31 an ein Druck-Entlastungsventil 40 angeschlossen. Die Kammer 26 (Stangenseite) des Hydraulikzylinders 20 steht über eine Rückführleitung 33 mit einem Überdruckventil 60 in hydraulischer Verbindung.

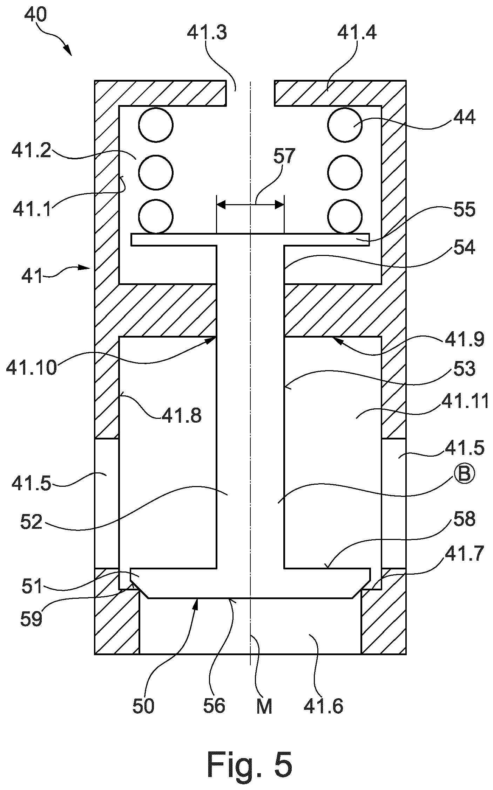

Nachfolgend wird unter Bezugnahme auf Figur 5 eine mögliche Ausgestaltungsvariante eines Druck-Entlastungsventils 40 erläutert. Wie diese Darstellung veranschaulicht, besitzt das Druck-Entlastungsventil 40 einen Zylinder 41 mit einer Zylinderwand. An diese Zylinderwand ist ein Zylinderboden 41.4 angekoppelt. Die Zylinderwand bildet eine Zylinderinnenwand 41.1. Der Zylinderboden 41.4 besitzt wenigstens einen Durchlass 41.3. Denkbar ist es jedoch auch, dass ein solcher Durchlass 41.3 in der Zylinderwand vorgesehen ist. Über den Durchlass 41.3 kann eine Verbindung eines Außen-Druckbereichs 41.2 mit der Umgebung hergestellt werden. Der Außen-Druckbereich 41.2 bildet einen Raum im Zylinder 41.

Figur 5 veranschaulicht, dass der Außen-Druckbereich 41.2 von dem Zylinderboden 41.4 sowie einer Zylinderinnenwand 41.1 des Zylinders 41 begrenzt ist. Weiterhin begrenzt eine Kolbenführung 41.9 den Außen-Druckbereich 41.2 auf der dem Zylinderboden 41.4 abgewandten Seite. In dem Außen-Druckbereich 41.2 ist eine Feder 44 angeordnet. Die Feder 44 kann, wie dies die Zeichnung veranschaulicht, als Schraubenfeder ausgebildet sein. Denkbar ist es jedoch auch, dass eine andere mechanische Feder, beispielsweise eine Tellerfeder oder eine Kombination von mechanischen Federelementen die Feder 44 bildet.

Im Innenraum des Zylinders 41 ist ein Kolben 50 angeordnet. Der Kolben 50 besitzt ein Druckstück 55. Mittels diesem Druckstück 55 ist der Kolben 50 gegenüber der Feder 44 abgestützt. Weiterhin kann es so sein, dass die Feder 44 am Zylinderboden 41.4 oder an einer anderen geeigneten Stelle im Zylinder 41 abgestützt ist.

Figur 5 zeigt, dass der Kolben 50 einen Kolbenkopf 51 aufweisen kann. An den Kolbenkopf 51 ist eine Kolbenstange 52 angeschlossen, vorzugsweise einteilig angeformt.

Die Kolbenstange 52 kann, wie Figur 5 zeigt, eine zylinderförmige Außenkontur aufweisen.

Die Kolbenstange 52 ist an der Kolbenführung 41.9 im Zylinder 41 längs der Mittellängsachse M des Zylinders 41 linear geführt. Dabei kann es so sein, dass die Kolbenstange 52 eine äußere Führungsfläche 53 aufweist, die vorzugsweise von der zylinderförmigen Außenkontur der Kolbenstange 51 gebildet wird. Die Führungsfläche 53 ist abgedichtet durch einen Durchbruch 41.10 der Kolbenführung 41.9 hindurchgeführt und in dem Durchbruch 41.10 geführt.

Gemäß Figur 5 kann es so sein, dass, abgetrennt von dem Außen-Druckbereich 41.2 ein Kammerbereich 41.11 innerhalb des Zylinders 41 gebildet ist. Vorzugsweise kann es so sein, dass der Kammerbereich 41.11 an seiner, dem Zylinderboden 41.4 zugewandten Seite mittels der Kolbenführung 41.9 begrenzt ist, um eine kompakte Bauform zu erreichen.

Radial außen ist der Kammerbereich 41.11 vorteilhafterweise von einer Innenwand 41.8 der Zylinderwand begrenzt. Auf seiner dem Zylinderboden 41.4 abgewandten Seite kann der Kammerbereich 41.11 in der in Figur 5 gezeigten Schließstellung des Kolbens 50 mit dem Kolbenkopf 51 abgeschlossen sein. Hierbei begrenzt ein Flächenbereich 58 des Kolbenkopfs 51 den Kammerbereich 41.11 auf der dem Kolbenboden 41.4 abgewandten Seite.

Wie Figur 5 zeigt, kann es so sein, dass die Zylinderwand des Zylinders 41 wenigstens eine Ausströmöffnung 41.5 aufweist. Diese Ausströmöffnung 41.5 stellt eine leitende Verbindung zwischen einem Druckausgleichsbereich B und dem Kammerbereich 41.11 her.

In der in Figur 5 gezeigten Schließstellung liegt der Kolbenkopf 51 mit einer Ventilfläche 59 an einem Ventilsitz 41.7 des Zylinders 41 abgedichtet an.

Vorteilhafterweise ist es so, dass der Kolbenkopf 51 in der in Figur 5 gezeigten Schließstellung mit einer Kolben-Druckfläche 56 eine Druckkammer 41.6 begrenzt. Dabei kann es so sein, dass die Kolben-Druckfläche 56 sich an den Ventilsitz 41.7 anschließt.

Die Druckkammer 41.6 ist über die Druckleitung 31 an den Druckraum 24 des Hydraulikzylinders 20 angeschlossen und steht mit diesem in fluidleitender Verbindung.

Die Kolben-Druckfläche 56, die die Druckkammer 41.6 quer zur Stellvorrichtung des Kolbens 50 begrenzt, ist die Fläche des Kolbens 51, auf dem in der Schließstellung des Druck-Entlastungsventils 40, in der in Figur 5 gezeigten Schließstellung der Druck in der Druckkammer 41.6 anliegt. Dabei ist diese Fläche ausgebildet und angeordnet, um unter Einwirkung des Drucks in der Druckkammer 41.6 eine Öffnungskraft in Richtung der Öffnungsstellung (in Figur 5 von unten nach oben) in den Kolben 50 einzubringen. Die in Richtung der Mittellängsachse M in eine Projektionsebene projizierte Fläche dieser Kolben-Druckfläche 56 erzeugt in Zusammenwirken mit dem Druck in der Druckkammer 41.6 die Öffnungskraft in Richtung der Mittellängsachse M.

Weitere Flächenstücke des Kolbens 50, die nicht geeignet sind eine Öffnungskraft in den Kolben 50 einzubringen, sind keine Kolben-Druckflächen 56 im Sinne der Erfindung.

Der Flächenbereich 58, der den Kammerbereich 41.4 quer zur Stellrichtung des Kolbens 50 begrenzt, ist im Sinne der Erfindung die Fläche, die ausgebildet und angeordnet ist, um unter Einwirkung des Drucks im Kammerbereich 41.11 eine Schließkraft in Richtung der Schließstellung (in Figur 5 von oben nach unten) in den Kolben 50 einzubringen. Die in Richtung der Mittellängsachse M in die Projektionsebene projizierte Fläche dieses Flächenbereichs 58 erzeugt in Zusammenwirken mit dem Druck in dem Kammerbereich 41.11 die in Richtung der Mittellängsachse M wirkende Schließkraft.

Weitere Flächenstücke des Kolbens 50, die nicht geeignet sind eine Schließkraft in den Kolben 50 einzubringen, sind keine Flächenbereiche 58 des Kolbens 50 im Sinne der Erfindung.

Figur 5 veranschaulicht, dass der Kolben 50 mittels eines Stellstücks 54 in den Außen-Druckbereich 41.2 geführt ist. Im Außen-Druckbereich bildet das Stellstück 54 eine Ausgleichs-Druckfläche 57. Die Ausgleichs-Druckfläche 57 bildet eine Fläche, die den Außen-Druckbereich 41.2 quer zur Stellrichtung des Kolbens 50 begrenzt.

Die Ausgleichs-Druckfläche 57 ist ausgebildet und angeordnet, um unter Einwirkung des Drucks im Außen-Druckbereich 41.6 eine Schließkraft in Richtung der Schließstellung (in Figur 5 von oben nach unten) in den Kolben 50 einzubringen. Die in Richtung der Mittellängsachse M in die Projektionsebene projizierte Fläche dieser Ausgleichs-Druckfläche 57 erzeugt in Zusammenwirken mit dem Druck im Außen-Druckbereich 41.2 eine in Richtung der Mittellängsachse M wirkende Schließkraft. Deutlich erkennbar sind am Druckstück 55 weitere Flächenbereiche vorhanden. Diese sind jedoch nicht geeignet eine Schließkraft in den Kolben 50 einzubringen und können daher nicht als Ausgleichs-Druckfläche 57 verstanden werden.

Das Druck-Entlastungsventil 40 ist so in der Überlast-Auslöseeinrichtung 30 angeschlossen, dass der Druckraum 24 des Hydraulikzylinders 20 mit der Druckkammer 41.6 in fluidleitender Verbindung steht.

Der Kammerbereich 41.11 steht über die Rückführleitung 33 in fluidleitender Verbindung mit der Stangenseite 26 des Hydraulikzylinders.

Vorteilhafterweise ist es so, dass der Außen-Druckbereich 41.2 mit der umgebenden Atmosphäre in Verbindung steht, also hier Atmosphärendruck ansteht.

Während des normalen Brechbetrieb, also dann, wenn keine Überlastsituation vorliegt, ergibt sich die in Figur 5 gezeigte Schließstellung des Druck-Entlastungsventils 40.

In einem Überlastfall erhöht sich der Druck in dem Druckraum 24 des Hydraulikzylinders 20 schlagartig dadurch, dass die Kolbenstange 22 in den Zylinder 25 des Hydraulikzylinders 20 einfährt. Dieser Druck steht dann auch an der Druckkammer 41.6 an. Hierdurch verfährt der Kolben 50 gegen die Vorspannung der Feder 44 aus der in Figur 5 gezeigten Schließstellung heraus und gibt den Ventilsitz 57 frei. Hierdurch kann das Hydraulikfluid aus der Druckkammer 41.6 über die Austrittsöffnung 41.5 in den Druck-Ausgleichsbereich B gelangen.

Über den Leitungsabschnitt 32 und die Rückführleitung 33 wird dieses entlastete Hydraulikfluid der Stangenseite 26 des Hydraulikzylinders 20 zugeleitet. Überschüssiges Hydraulikfluid, das auf der Stangenseite 26 nicht aufgenommen werden kann, wird über die Sammelleitung 34 und ein sich dann öffnendes Überdruckventil 60 in den Tank 36 geleitet. Nach Beendigung des Überlastfalls kann dieses Hydraulikfluid aus dem Tank 36 genutzt werden, um den Druckraum 24 wieder zu befüllen. Dann wird der Hydraulikzylinder-Kolben 23 in die Ausgangsstellung zurückgestellt und der Hydraulikzylinder 20 somit wieder in seine Betriebsstellung gebracht.

Wenn der Druck in der Druckkammer 41.6 abgesunken ist, so stellt die Feder 44 den Kolben 50 des Druck-Entlastungsventils 40 wieder zurück in die in Figur 5 gezeigte Schließstellung.

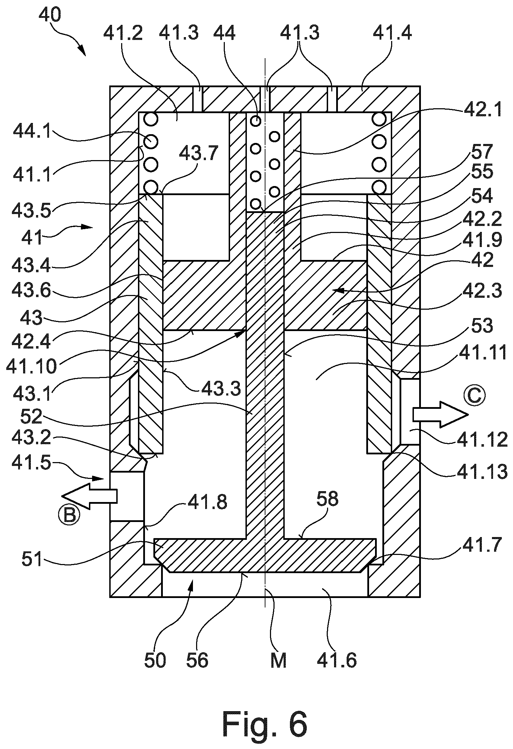

In Figur 6 ist eine weitere Ausgestaltungsvariante eines erfindungsgemäßen Druck-Entlastungsventils 40 gezeigt. In diesem Druck-Entlastungsventil 40 sind die Funktionalitäten des Druck-Entlastungsventils 40 gemäß Figur 5 und des Überdruckventils 60 gemäß Figur 4 vereint.

In Figur 6 sind im Vergleich zu Figur 5 gleichen Bezugszeichen gleichen Bauteilen zugeordnet, sodass zur Vermeidung von Wiederholungen auf die obigen Ausführungen Bezug genommen werden kann. Nachfolgend werden daher die Unterschiede zwischen den beiden Ausgestaltungsvarianten eines Druck-Entlastungsventils gemäß den Figuren 5 und 6 erläutert.

Wie Figur 6 zeigt, ist wieder ein Zylinder 41 mit Zylinderboden 41.4 und Zylinderwand verwendet. In dem Außen-Druckbereich 41.2 ist die Feder 44 angeordnet, die den Kolben 50 abstützt. Im vorliegenden Ausführungsbeispiel ist im Außen-Druckbereich ein Verbindungsabschnitt 42.1 abgetrennt, der die Feder 44 aufnimmt. Der Bereich, in dem die Feder 44 aufgenommen ist, steht wieder über wenigstens einen Durchlass 41.3 mit der Umgebung in Verbindung. Der übrige Raum des Außen-Druckbereichs 41.2 steht ebenfalls über wenigstens einen Durchlass 41.3 mit der Umgebung in Verbindung. Außerdem ist hier eine weitere Feder 44.1 angeordnet.

Vorzugsweise ist der Verbindungsabschnitt Teil einer im Zylinder 41 angeordneten Überbrückungsvorrichtung 42, die die Kolbenführung 41.9 bildet. Die Überbrückungsvorrichtung 42 teilt wieder den Kammerbereich 41.11 von dem Außen-Druckbereich 41.2 ab.

Die Überbrückungsvorrichtung 42 überdeckt, im Unterschied zu dem Ausführungsbeispiel nach Figur 5, nicht die gesamte Querschnittsfläche des Innenraums des Zylinders 41. Vielmehr ist es so, dass zwischen dem radial äußeren Umfang der Überbrückungsvorrichtung 42 und der Zylinderinnenwand 41.1 ein Entlastungs-Kolben 43 angeordnet ist. Dieser kann, wie im vorliegenden Ausführungsbeispiel gezeigt, als zylindrische Hülse ausgebildet sein.

Zur Führung des Entlastungs-Kolbens 43 besitzt die Überbrückungsvorrichtung 42 einen Kopf 42.3, der über einen Träger 42.2 an den Verbindungsabschnitt 42.1 einteilig angeschlossen sein kann.

Der Kopf 42.3 ist radial außen mit einer Führung versehen, an der der Entlastungs-Kolben 43 mittels einer Führungsfläche 43.6 abgedichtet geführt ist. Radial außen besitzt der Entlastungs-Kolben 43 eine Außenwand 43.1, die abgedichtet an der Zylinderinnenwand 41.1 geführt ist.

Der Entlastungs-Kolben 43 kann so ausgestaltet sein, dass er den Kammerbereich 41.11 mit einer Innenwandung teilweise begrenzt. In dem in Figur 6 gezeigten Schließzustand überdeckt die Innenwandung 43.3 einen Fluid-Auslass 41.12. Der Fluid-Auslass 41.12 kann über eine Anschlussleitung (nicht gezeigt) mit dem Tank 36 verbunden werden.

Figur 6 veranschaulicht weiterhin, dass der Entlastungs-Kolben 43 mit einem Stützabschnitt 43.4 in den Außen-Druckbereich 41.2 hineingeführt sein kann. Der Stützabschnitt 43.4 weist einen Stellabschnitt 43.5 auf. Mit diesem Stellabschnitt 43.5 stützt sich der Entlastungs-Kolben 43 an der weiteren Feder 44.1 ab. Die weitere Feder 44.1 ist gegenüber dem Zylinderboden 41.4 oder einem anderen Bauteil des Zylinders 41 abgestützt, wobei die weitere Feder 44.1 eine Vorspannung in den Entlastungs-Kolben 34 in Richtung der in Figur 6 gezeigte Schließstellung aufbringt.

In der Schließstellung ist der Entlastungs-Kolben 43 an einem weiteren Ventilsitz 41.13 des Zylinders 41 abgedichtet gehalten, wie Figur 6 zeigt. In diesem Schließzustand riegelt der Entlastungs-Kolben 43 die Verbindung zwischen dem Fluid-Auslass 41.12 und dem Kammerbereich 41.11 ab.

Im Bereich des Stützabschnitts 43.4 besitzt der Entlastungs-Kolben 43 wenigstens eine Entlastungs-Druckfläche 43.7, und dem Kammerbereich 41.11 zugewandt ist eine Kolben-Druckfläche 43.2 am Entlastungs-Kolben 43 vorgesehen. Vorzugsweise sind die Kolben-Druckfläche 43.2 und/oder die Entlastungs-Druckfläche 43.7 als umlaufende, ringförmige Flächen ausgebildet. Besonders bevorzugt sind diese beiden Flächen gleich, haben also den gleichen Flächeninhalt.

Auf der Kolben-Druckfläche 43.2 lastet der Druck im Kammerbereich 41.11. Auf der Entlastungs-Druckfläche 43.7 lastet der Druck des Außen-Druckbereichs 41.2.

Die Kolben-Druckfläche 43.2 des Entlastungs-Kolbens 43, die den Kammerbereich 41.4 quer zur Stellrichtung des Entlastungs-Kolbens 50 begrenzt, kann, wie gezeigt ausgebildet und angeordnet sein, um unter Einwirkung des Drucks im Kammerbereich 41.11 eine Öffnungskraft in Richtung der Öffnungsbewegung (in Figur 5 von unten nach oben) in den Entlastungs-Kolben 43 einzubringen. Die in die in Richtung der Mittellängsachse M in die Projektionsebene projizierte Fläche dieser Kolben-Druckfläche 43.2 erzeugt in Zusammenwirken mit dem Druck in dem Kammerbereich 41.11 die in Richtung der Mittellängsachse M wirkende Öffnungskraft.

Die Entlastungs-Druckfläche 43.7, die den Außen-Druckbereich 41.2 quer zur Stellrichtung des Entlastungs-Kolbens 50 begrenzt, kann, wie die Zeichnungen zeigen, ausgebildet und angeordnet sein, um unter Einwirkung des Drucks im Außen-Druckbereich 41.2 eine Schließkraft in Richtung der Schließstellung (in Figur 5 von oben nach unten) in den Entlastungs-Kolben 43 einzubringen. Die in die in Richtung der Mittellängsachse M in die Projektionsebene projizierte Fläche dieser Entlastungs-Druckfläche 43.7 erzeugt in Zusammenwirken mit dem Druck in dem Außen-Druckbereich 41.2 die in Richtung der Mittellängsachse M wirkende Schließkraft.

Im oben beschriebenen Normalbetrieb des Brechers steht das Druck-Entlastungsventils 40 in der in Figur 6 gezeigten Schließstellung.

Im Überlastfall wird der Kolben 50 gegen die Vorspannung der Feder 44 mit seinem Kolbenkopf 51 in den Kammerbereich 41.11 hineinverstellt. Dabei öffnet sich die Verbindung zwischen der Druckkammer 41.6 und dem Druck-Ausgleichsbereich B (siehe oben). Übersteigt der Druck am Entlastungs-Kolben 43 die auf ihn wirkenden schließenden Kräfte, so öffnet auch der Entlastungs-Kolben 43 und gibt die Verbindung zwischen dem Kammerbereich 41.11 und dem Entlastungs-Druckbereich C frei. Damit kann das Hydraulikfluid aus dem Kammerbereich 41.11 in den Tank 43 abfließen.

Wenn nach Beendigung des Überlastfalls die Schließkräfte wieder die Öffnungskräfte übersteigen, so schließen der Entlastung-Kolben 43 und der Kolben 50 und gelangen wieder in die in Figur 6 gezeigte Schließstellung.

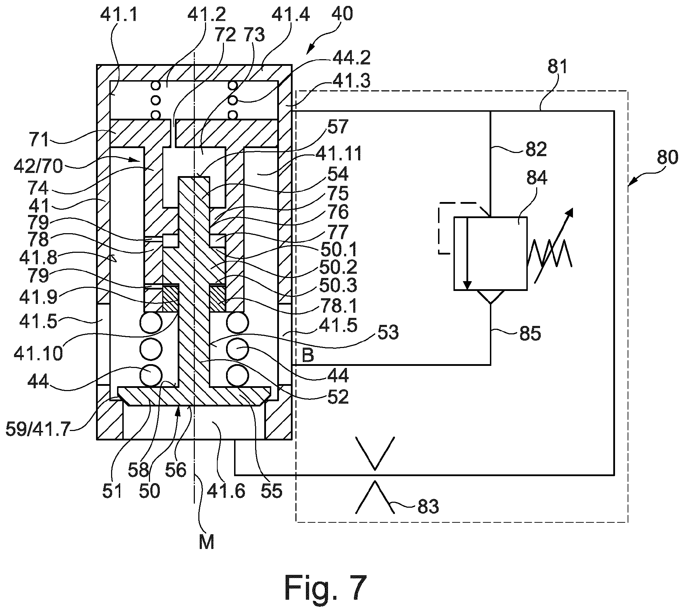

Figur 7 zeigt eine weitere Ausgestaltungsvariante der Erfindung. Gleiche Bauteile sind hier mit gleichen Bezugszeichen versehen, so dass zur Vermeidung von Wiederholungen auf die obigen Ausführungen Bezug genommen werden kann.

Wie die Darstellung zeigt, ist ein Druck-Entlastungsventil 40 verwendet, welches einen Zylinder 41 aufweist. Der Zylinder 41 besitzt wieder eine Zylinderinnenwand 41.1.

Dem Zylinder 41 zugeordnet ist ein Außen-Druckbereich 41.2 vorgesehen. Der Außen-Druckbereich 41.2 steht mit einer Umsteuer-Hydraulik 80 in räumlicher Verbindung.

Der Zylinder 41 besitzt einen Kammerbereich 41.11, der wenigstens eine Austrittsöffnung 41.5 aufweist. Innerhalb des Zylinders 41 ist ein Kolben 50 verstellbar angeordnet. Der Kolben 50 liegt in der in Figur 6 gezeigten Schließstellung mit einer Ventilfläche 59 an einem Ventilsitz 41.7 des Zylinders 41 an. Die Innenwand 41.8 bildet zumindest bereichsweise eine Gleitfläche, an der eine Überbrückungsvorrichtung 42 verstellbar geführt ist.

Die Überbrückungsvorrichtung 42 kann beispielsweise von einem Steuerkolben 70 gebildet sein oder einen solchen aufweisen, wie dies Figur 7 zeigt.

Innerhalb des Zylinders 41 ist die Überbrückungsvorrichtung 42, die insbesondere in Form eines Steuerkolbens 70 ausgebildet sein kann, verstellbar geführt. Hierzu weist der Steuerkolben 70 bzw. die Überbrückungsvorrichtung 42 einen Kopf 71 auf, der an seinem Außenumfang abgedichtet an der als Gleitfläche ausgebildeten Innenwand 41.8 des Zylinders 41 geführt ist.

Der Steuerkolben 70 besitzt eine Kammer 73, die über wenigstens einen Durchlass 72 in räumliche Verbindung mit dem Außen-Druckbereich 41.2 steht.

Wie Figur 6 zeigt, kann es so sein, dass der Steuerkolben 70 einen Verbindungsabschnitt 74 aufweist, der in den Kammerbereich 41.11 ragt. Dabei kann sich der Verbindungsabschnitt 74 insbesondere in Richtung der Mittellängsachse in den Kammerbereich 41.11 hinein erstrecken. Es kann so sein, dass der Verbindungsabschnitt 74 die Kammer 73 zumindest bereichsweise bildet.

Der Steuerkolben 70 kann eine Führung 75 aufweisen, die insbesondere von einem Durchbruch 76 gebildet sein kann. Die Führung 75 nimmt eine Kolbenstange 52 des Kolbens 50 auf, wobei die Kolbenstange 52 unmittelbar oder mittelbar an den Kolben 50 angekoppelt sein kann. Vorzugsweise ist der Kolben 50 abgedichtet in dem Durchbruch 76 geführt.

Gemäß einer möglichen Ausgestaltungsvariante kann es so sein, dass der Steuerkolben 70 eine Aufnahme 77 bildet. In dieser Aufnahme 77 ist ein Anschlagstück 50.2 des Kolbens 50 aufgenommen. Dabei kann es so sein, dass das Anschlagstück 50.2 einen 1. Anschlag 50.1 und einen 2. Anschlag 50.3 aufweist. Die Anschläge 50.1 und 50.3 dienen zur Bewegungsbegrenzung des Kolbens 50 gegenüber dem Steuerkolben 70. Zu diesem Zwecke sind an dem Steuerkolben 70 Gegen-Anschläge angeordnet. Einer der Gegen-Anschläge kann von einem abnehmbaren Deckel 78.1 gebildet sein, der die Montage des Kolbens 50 an dem Steuerkolben 70 ermöglicht. Der Deckel 78.1 kann eine Kolbenführung 41.9 bilden.

Wie die Zeichnungen zeigen, kann es so sein, dass die Aufnahme 77 von einer umlaufenden Wand 78 des Steuerkolbens 70 begrenzt ist.

Es kann so sein, dass die Aufnahme 77 über Durchlässe 79 mit dem Kammerbereich 41.11 in Verbindung steht. Dabei sind die Durchlässe 79 zu beiden Seiten der Anschläge 50.1, 50.3 angeordnet, wie Figur 6 deutlich zeigt.

Der Steuerkolben 70 ist mittels einer Stützfeder 44.2 in Richtung der Schließstellung des Ventils vorgespannt. Es kann so sein, dass die Stützfeder 44.2 in dem Außen-Druckbereich 41.2 angeordnet ist. Es kann so sein, dass sich die Stützfeder 44.2 auf einem Zylinderboden 41.4 des Zylinders 41 abstützt und gegenüberliegend an dem Kopf 71 des Steuerkolbens 70 anliegt, wie Figur 6 zeigt.

Figur 6 veranschaulicht, dass der Kolben 50 im Bereich der Kolbenstange 52 das Anschlagstück 50.2 aufweisen kann.

Wie aus Figur 6 hervorgeht, kann es so sein, dass der Kolben 50 ein Stellstück 54 aufweist, dass durch den Durchbruch 76 hindurch in den Außen-Druckbereich 41.2 geführt ist. Im vorliegenden Ausführungsbeispiel ist es so, dass das Druckstück 54 in den Bereich der Kammer 73 geführt ist. Über den Durchlass 72 bildet die Kammer 73 einen Teil des Außen-Druckbereichs 41.2.

Das Druckstück 54 bildet wieder eine Ausgleichs-Druckfläche 57. Der Kolben 50 besitzt eine Kolben-Druckfläche 56, die in dem in Figur 6 gezeigten Schließzustand eine Druckkammer 41.6 begrenzt. Die Druckkammer 41.6 steht in räumlicher Verbindung mit der Druckkammer 24 des Hydraulikzylinders 20 (oder ggfs. mit der Kammer 26). Gegenüberliegend der Druckkammer 41.6 bildet der Kolben 50 einen Flächenbereich 58. Dieser Flächenbereich 58 begrenzt im Schließzustand gemäß Figur 6 den Kammerbereich 41.11, wie dies Figur 6 zeigt.

Der Kolben 50 ist mittels der Feder 44 federvorgespannt gegenüber dem Steuerkolben 70 abgestützt. Dabei bringt das Federelement 44 in der Schließstellung des Kolbens 50 eine Vorspannung in Richtung der Mittellängsachse ein, die den Kolben 50 mit seiner Ventilfläche 59 gegen den Ventilsitz 41.7 presst.

Wie die Zeichnungen zeigen, kann es so sein, dass die Umsteuer-Hydraulik 80 über eine Steuerleitung 81 in räumlicher Verbindung mit dem Außen-Druckbereich 41.2 steht. Hierzu kann sie an den wenigstens einen Durchlass 41.3 angeschlossen sein. Die Steuerleitung 81 ist an die Druckkammer 41.6 angeschlossen, bzw. steht mit dieser in räumlicher Verbindung. In die Steuerleitung 81 kann eine Blende 83 oder eine Drossel eingebaut sein.

Von der Steuerleitung 81 geht anschließend an den Durchlass 41.3 ein Abzweig 82 ab, der über einen Leitungsabschnitt 85 mit dem Kammerbereich 41.11 in räumlicher Verbindung steht, beispielsweise an die Austrittsöffnung 41.5 angeschlossen ist.

In den Abzweig 82 ist ein Ventil 84 integriert. Dieses Ventil 84 kann als Druckbegrenzungsventil ausgebildet sein, das bei Erreichen eines Grenzdrucks öffnet und den Weg freigibt, um Hydraulikflüssigkeit von dem Durchlass 41.3 hin zu dem Kammerbereich 41.11 zu leiten.

In einer alternativen Ausgestaltungsvariante kann es auch so sein, dass der Leitungsabschnitt 85 nicht an den Kammerbereich 41.11 angeschlossen ist, sondern an einen externen Raum, der beispielsweise unter Umgebungsdruck steht und der beispielsweise in Form eines Tanks ausgebildet sein kann. Hierdurch kann erreicht werden, dass beim Schalten des Ventils 84 der Außen-Druckbereich 41.2 innerhalb kurzer Zeit entlastet werden kann, da nur ein geringer Gegendruck vorliegt.

Im Benutzungseinsatz steht während des normalen Brechbetriebs der Druck des Druckraums 24 des Hydraulikzylinders 20 an der Druckkammer 41.6 an. Dieser Druck liegt auch im Außen-Druckbereich 41.2 an, nämlich über die verbindende Steuerleitung 81. Die Feder 44 und die Stützfeder 44.2, die wie vorliegend in Reihe geschaltet sein können, unterstützen die Schließkraft, die den Kolben 50 in dem in Figur 6 gezeigten Schließzustand hält.

Steigen während des Brechbetriebs die Brechkräfte innerhalb zulässiger Grenzen an, so erhöht sich der Druck im Druckraum 24 des Hydraulikzylinders 20. Entsprechend erhöhen sich über die Steuerleitung 81 auch die Drücke im Außen-Druckbereich 41.2 bzw. in der Kammer 73. Bis zu einem gewissen Grenzdruck wird der Kolben 50, unterstützt durch die Feder 44 bzw. der Stützfeder 44.2, in der Schließstellung gehalten.

Steigen während des Brechbetriebs nun die Brechkräfte infolge einer Überlastsituation stark an, so wird die Feder 44 komprimiert und der Kolben 50 hebt vom Ventilsitz 41.7 ab. Das Hydraulikfluid in der Druckkammer 41.6 fließt in den Druck Ausgleichsbereich B ab. Die bewegten Massen aus Kolben 50 und Feder 44 können klein ausgebildet werden, da unter anderem der Ventilhub der Mechanik aus Kolben 50 und Feder 44 relativ klein gehalten wird. Somit kann eine schnelle Öffnung des Druck-Entlastungsventils 40 im Überlastfall erfolgen. Insbesondere die Feder 44 kann leicht gestaltet werden, da bei dieser Ausführung der Federhub der Feder 44 relativ zum Zylinderboden 41.4 im Verhältnis zum Kolbenhub des Kolbens 50 relativ zum Zylinderboden 41.4 kleiner ausgelegt werden kann.

Aufgrund der Verstellung des Kolbens 50 im Überlastfall baut sich über die Feder 44 eine zusätzliche Last auf dem Steuerkolben 70 auf. Zudem steht nun auch infolge des geöffneten Kolbens 50 der Druck in der Druckkammer 41.6 im Kammerbereich 41.11 an. Ist dieser Druck in dem Kammerbereich 41.11 nun größer als ein vorgegebener Grenzdruck, so wird der Steuerkolben, der Bewegung des Kolbens 50 folgend ebenfalls verstellt. Dabei erfolgt die Verstellung gegen die Vorspannung der Stützfeder 44.2. In Folge der Verstellung des Steuerkolbens 70 wird der Öffnungsbereich hin zum Druckausgleichsbereich B vergrößert, sodass innerhalb kurzer Zeit eine größere Menge an Hydraulikflüssigkeit in den Druckausgleichsbereich B abfließen kann.

Bei einer Verstellung des Steuerkolbens 70 wird Hydraulikflüssigkeit aus dem Außen-Druckbereich 41.2 in den Abzweig 82 verdrängt. Wird ein Schaltdruck am Ventil 84 überschritten, so öffnet das Ventil 84 und die Hydraulikflüssigkeit kann dann abfließen, woraus sich dann eine Verstellung des Steuerkolbens 70 ergibt.

Bei einer Verstellung des Steuerkolbens 70 gleitet dieser entlang der Innenwand 41.8, die als Gleitfläche ausgebildet sein kann und gegenüber der der Steuerkolben 70 abgedichtet geführt ist.

Nach Beendigung der Überlastsituation stellen die Feder 44 und die Stützfeder 44.2 den Kolben 50 bzw. den Steuerkolben 70 wieder zurück in die in Figur 6 gezeigte Ausgangsstellung.

## Patentansprüche

1. Brecher für mineralische Werkstoffe oder Recyclingwerkstoffe, insbesondere Rotationsprallbrecher, Backenbrecher, Kegelbrecher oder Walzenbrecher, mit einem Brechaggregat (10), das einen ersten Brechkörper (11), insbesondere einen Rotor oder eine Brechbacke aufweist, wobei dem ersten Brechkörper (11) ein zweiter bewegbarer Brechkörper (14), insbesondere eine Prallschwinge oder eine Brechbacke, zugeordnet ist, wobei zwischen den Brechkörpern (11, 14) ein Brechspalt (15) gebildet ist, wobei mit einem der Brechkörper (11, 14) ein Hydraulikzylinder (20) gekoppelt ist, der angeordnet und ausgebildet ist, um in einer Ausweichbewegung eine, die Breite des Brechspalts (15) vergrößernde Bewegung des angekoppelten Brechkörpers (11, 14) zuzulassen, wobei ein Druckraum (24) des Hydraulikzylinders (20) an eine Druckkammer (41.6) eines Druck-Entlastungsventils (40) einer Überlast-Auslöseeinrichtung (30) angeschlossen ist, wobei ein Kolben (50) des Druck-Entlastungsventils (40) zwischen einer Schließstellung und einer Öffnungsstellung verstellbar ist, wobei in der Schließstellung eine fluidleitende Verbindung zwischen der Druckkammer (41.6) und einem Druck-Ausgleichsbereich (B) gesperrt und in der Öffnungsstellung die fluidleitende Verbindung zumindest bereichsweise freigegeben ist, und wobei der Kolben (50) wenigstens eine Kolben-Druckflächen (56) aufweist, mittels der der Kolben (50) die Druckkammer (41.6) in der Schließstellung quer zur Stellrichtung des Kolbens (50) begrenzt,
**dadurch gekennzeichnet,**
**dass** der Kolben (50) auf seiner der Druckkammer (41.6) abgewandten Seite einen Flächenbereich (58) aufweist, der in der Schließstellung des Kolbens (50) einen Kammerbereich (41.11) quer zur Stellrichtung des Kolbens (50) begrenzt, um unter Einwirkung des Drucks im Kammerbereich (41.11) eine Schließkraft in Richtung der Schließstellung in den Kolben (50) einzubringen.

2. Brecher nach Anspruch 1, **dadurch gekennzeichnet, dass** an den Kolben (50) eine Ausgleichs-Druckfläche (57) mittelbar oder unmittelbar angeschlossen ist, die außerhalb der Druckkammer (41.6) in einem Außen-Druckbereich (41.2) gehalten ist, und dass die Ausgleichs-Druckfläche (57) ausgebildet und angeordnet ist, um unter Einwirkung des Drucks im Außen-Druckbereich (41.2) eine Schließkraft in Richtung der Schließstellung in den Kolben (50) einzubringen,

3. Brecher nach Anspruch 2, **dadurch gekennzeichnet, dass** an den Kolben (50) ein Stellglied, insbesondere eine Kolbenstange (52), angeschlossen ist, die außerhalb der Druckkammer (41.6) die Ausgleichs-Druckfläche (57) bildet.

4. Brecher nach Anspruch 2 oder 3, **dadurch gekennzeichnet, dass** in der Schließstellung des Kolbens (50) der Druck im Außen-Druckbereich (41.2) kleiner ist als in der Druckkammer (41.6) und dass der Außen-Druckbereich (41.2) in luftleitender Verbindung mit der Umgebung steht,
oder dass in der Schließstellung des Kolbens (50) der Druck eines Hydraulikfluids auf die Ausgleichs-Druckfläche (57) wirkt, und dass der Druck im Außen-Druckbereich (41.2) kleiner, gleich oder größer ist als in der Druckkammer (41.6).

5. Brecher nach einem der Ansprüche 2 bis 4, **dadurch gekennzeichnet, dass** der Außen-Druckbereich (41.3) in hydraulisch leitender Verbindung an eine Kammer (26) des Hydraulikzylinders (20) angeschlossen ist, die eine Kolbenstange (22) des Hydraulikzylinders (20) aufnimmt und in der ein Hydraulikfluid gehalten ist.

6. Brecher nach einem der Ansprüche 1 bis 5, **dadurch gekennzeichnet, dass** auf den Kolben (50) mittelbar oder unmittelbar eine Feder (44), insbesondere eine mechanische Feder (44), einwirkt, die in der Schließstellung des Kolbens (50) eine Schließkraft in Schließrichtung auf den Kolben (50) aufbringt.

7. Brecher nach Anspruch 6, **dadurch gekennzeichnet, dass** die Feder (44) im Außen-Druckbereich (41.2), insbesondere innerhalb des Zylinders (41) des Druck-Entlastungsventils (40), angeordnet ist.

8. Brecher nach Anspruch 2 bis 7, **dadurch gekennzeichnet, dass** die Druck-Ausgleichsfläche (57) von einem Druckstück (55) des Kolbens (50) gebildet wird, und dass die Feder (44) an dem Druckstück (55) abgestützt ist, wobei vorzugsweise vorgesehen ist, dass das Druckstück (55) einen radial außen über die Druck-Ausgleichsfläche (57) vorstehenden Bereich aufweist, an dem die Feder (44) abgestützt ist.

9. Brecher nach einem der Ansprüche 1 bis 8, **dadurch gekennzeichnet, dass** in der Schließstellung des Kolbens (50) der Druck eines Hydraulikfluids auf den Flächenbereich (58) wirkt, wobei vorzugsweise vorgesehen ist, dass der Druck im Kammerbereich (41.11) kleiner ist als in der Druckkammer (41.6), wobei insbesondere vorgesehen sein kann, dass der Kammerbereich (41.11) in hydraulisch leitender Verbindung an eine Kammer (26) des Hydraulikzylinders (20) angeschlossen ist, die eine Kolbenstange (22) des Hydraulikzylinders (20) aufnimmt und in der ein Hydraulikfluid gehalten ist.

10. Brecher nach einem der Ansprüche 1 bis 9, **dadurch gekennzeichnet, dass** der Flächenbereich (58) eine Ringfläche bildet, die sich vorzugsweise konzentrisch um das Stellglied, insbesondere die Kolbenstange (52), herum erstreckt.

11. Brecher nach einem der Ansprüche 1 bis 10, **dadurch gekennzeichnet, dass** sich das Stellglied, insbesondere die Kolbenstange (52), in der Schließstellung des Kolbens (50) durch den Kammerbereich (41.11) hindurch erstreckt, wobei vorzugsweise vorgesehen ist, dass der Kammerbereich (41.11) beabstandet zum Kolben (50) von einer Kolbenführung (41.9) begrenzt ist, wobei die Kolbenführung (41.9) einen Durchbruch (41.10) aufweist, durch den hindurch das Stellglied, insbesondere die Kolbenstange (52), mittels einer Führungsfläche (53) abgedichtet hindurch geführt ist.

12. Brecher nach einem der Ansprüche 1 bis 11, **dadurch gekennzeichnet, dass** der Kolben (50) einen Kolbenkopf (51) aufweist, an den das Stellglied, insbesondere die Kolbenstange (52), angekoppelt, vorzugsweise einteilig angeschlossen, ist, wobei der Kolbenkopf (51) aus seiner Schließstellung heraus in den Kammerbereich (41.11) hinein verstellbar ist, und wobei vorzugsweise vorgesehen ist, dass der Kolbenkopf (51) bei seiner Bewegung aus der Schließstellung in die Öffnungsstellung oder eine Teil-Öffnungsstellung an wenigstens einer Ausströmöffnung (41.5) zumindest teilweise vorbeigeführt wird, um eine hydraulisch leitende Verbindung zwischen der Druckkammer (41.6) und dem Druck-Ausgleichsbereich (B) herzustellen.

13. Brecher nach einem der Ansprüche 1 bis 12, **dadurch gekennzeichnet, dass** der Kolben (50) in einer Überbrückungsvorrichtung (42) verstellbar angeordnet ist, die vorzugsweise als ein verstellbarer Steuerkolben (70) ausgebildet ist, der vorzugsweise innerhalb des Zylinders (41) verstellbar geführt ist oder die ortsfest in dem Zylinder (41) gehalten ist.

14. Brecher nach einem der Ansprüche 1 bis 13, **dadurch gekennzeichnet, dass** innerhalb des Kammerbereichs (47.11) ein Entlastungs-Kolben (43) verstellbar geführt ist, wobei der Entlastungs-Kolben (43) zwischen einer Schließstellung und einer Öffnungsstellung verstellbar ist, wobei in der Schließstellung eine fluidleitende Verbindung zwischen der Druckkammer (41.6) und einem Entlastungs-Ausgleichsbereich (C) gesperrt und in der Öffnungsstellung die fluidleitende Verbindung zumindest bereichsweise freigegeben ist, dass der Entlastungs-Kolben (43) wenigstens eine Kolben-Druckflächen (43.2) aufweist, mittels der der Entlastungs-Kolben (43) den Kammerbereich (47.11) in der Schließstellung quer zur Stellrichtung des Entlastungs-Kolben (43) begrenzt, und dass infolge einer Druckerhöhung des Drucks in dem Hydraulikzylinder (20) der Kolben (50) und der Entlastungs-Kolben (43) nacheinander öffnen.

15. Brecher nach Anspruch 14, **dadurch gekennzeichnet, dass** im Schließzustand des Entlastungs-Kolbens (43) die Projektion der Kolben-Druckfläche (43.2) oder der Kolben-Druckflächen (43.2) des Entlastungs-Kolbens (43) in eine Projektionsebene quer zur Stellrichtung des Entlastungs-Kolbens (43) nur einen Teil des Kammerbereichs (41.11) quer zur Stellrichtung des Entlastungs-Kolbens (43) begrenzt.

16. Brecher nach Anspruch 15, **dadurch gekennzeichnet, dass** eine Überbrückungsvorrichtung (42) vorgesehen ist, gegenüber der der Entlastungs-Kolben (43) verstellbar ist, dass die Überbrückungsvorrichtung (42) wenigstens einen Druckflächenabschnitt (42.4) aufweist, der den Kammerbereich (41.11) in Stellrichtung des Entlastungs-Kolbens (43) begrenzt, und dass eine Projektion des Druckflächenabschnitts (42.4) oder der Druckflächenabschnitte (42.4) in Richtung der Stellbewegung des Entlastungs-Kolbens (43) in die Projektionsebene, die projizierten Kolben-Druckfläche-/n (43.2) nicht oder nicht vollständig überdeckt.
